# EUROPEAN PATENT SPECIFICATION

(11) **EP 1 422 124 B1**
(45) Date of publication and mention of the grant of the patent: **14.03.2007**
(21) Application number: 03104065.2
(22) Date of filing: 03.11.2003
(51) Int. Cl.: B62D 13/02, B62D 53/00

(54) **Articulated vehicle**
Gelenkfahrzeug
Véhicule articulé

(30) Priority: 22.11.2002 GB 0227314
(43) Date of publication of application: 26.05.2004
(73) Proprietor: Denby Transport Limited, Lincoln LN6 3JR (GB)
(72) Inventor: Denby, Richard, Denby Transport Limited, Lincoln LN6 3RJ (GB); Goodwins, John, Dereham NR19 2DR (GB)
(74) Representative: Loven, Keith James

(56) References cited:
- AU-B- 559 658
- DE-A- 4 119 014
- US-A- 3 591 203
- US-A- 4 030 171
- US-A- 4 650 205
- US-B1- 6 257 611

## Description

The present invention relates to articulated vehicles, and in particular, although not exclusively, to articulated lorries comprising tractor units pulling two or more trailer units.

### Background to the Invention

Articulated vehicles are very well known. A standard articulated goods lorry comprises a tractor unit pulling a single trailer unit The coupling between the tractor and trailer unit is achieved by means of a king pin on the trailer unit which is received in a suitable aperture on the tractor unit. This aperture is typically a central circular hole in a device which is referred to in the art as the "fifth wheel". This fifth wheel is a standard component, and comprises a generally circular plate, with the king pin receiving hole in the centre, and a tapered groove or cut-out portion leading to the aperture. The purpose of the tapered cut-out is to help guide the king pin of the trailer unit into the receiving orifice as the trailer unit is being coupled to the tractor unit. Once the king pin is received in the fifth wheel it is free to rotate about a vertical axis, but is constrained in the horizontal plane relative to the tractor unit. The king pin and fifth wheel arrangement thus provides a hinged coupling between the tractor and trailer units.

It is clearly desirable to increase the carrying capacity of an articulated vehicle, if possible, to reduce environmental impact and reduce transportation costs.

One way of achieving increased capacity is to increase the height of the container part of the trailer unit, but height restrictions are enforced in many countries, placing an upper limit on the increase in capacity which can be achieved by this method.

Faced with such height restrictions, and the fact that increased height can be undesirable from a vehicle stability standpoint, another way of improving vehicle carrying capacity is to increase the length of the trailer unit. However, many countries also enforce length restrictions. Furthermore, may countries insist that articulated vehicles must meet certain turning circle standards. In the UK, for example, for an articulated vehicle to be permitted on public roads it must be able to travel around a circular path whilst keeping within an outer circle of radius 12.5 metres and outside an inner circle of radius 5.3 metres.

To improve the turning circle of articulated vehicles with a single articulated joint, i.e. vehicles comprising a tractor unit and single trailer unit, it is known to employ active steering of the trailer unit wheels. In such arrangements, one of more of the trailer unit axles are steerable in response to flexing of the coupling between the tractor unit and trailer unit. The known steering mechanisms are arranged so as to steer the wheels of the trailer unit in the opposite direction to the steering wheels of the tractor unit.

Although these active steering techniques offer some improvements, as the trailer unit is made longer in order to carry increased loads, there comes a point where the vehicle can no longer meet the turning circle requirements such as those currently in force in the UK.

Articulated vehicles with two trailer units, pulled in series, are also known. These vehicles tend to be permitted on the roads only in countries where turning circle requirements are much less stringent than in the UK, for example in Sweden and South Africa. Typically, both trailer units include multiple fixed axles.

US-A-4 650 205 discloses a road train having a tractor vehicle connected by a fifth wheel connection to a first trailer which is connected at its rearmost end through a second fifth wheel to an auxiliary wheeled vehicle. The auxiliary wheeled vehicle mounts a third fifth wheel by which a second trailer is coupled to the train. The auxiliary wheeled vehicle has two sets of wheels, the rear set being steered according to the relative angle between the first trailer and the auxiliary vehicle.

To date, none of the multi-trailer articulated lorries has been able to comply with the turning circle requirements for the UK.

### Summary of the Invention

Certain embodiments of the present invention aim to provide a multi-trailer articulated vehicle which offers improved turning circle performance compared with the prior art arrangements, and which meets current UK turning circle standards. Embodiments of the invention aim to offer increased length whilst meeting existing turning circle standards, and so enable increased quantities of goods to be carried by each vehicle. This offers substantial benefits from an environmental standpoint, as it enables the same quantity of goods to be carried by fewer lorries on the roads, and also reduces the fuel consumption per kilogram of load per kilometre carried.

According to a first aspect of the present invention there is provided an articulated vehicle comprising, a steerable tractor unit; an interlinking trailer unit comprising at least one pair of steerable wheels mounted on steerable axle means; a first fifth wheel flexibly coupling the interlinking trailer unit to the tractor unit such that the interlinking trailer unit may be pulled by the tractor unit; a second trailer unit; and second flexible coupling means flexibly coupling the second trailer unit to the interlinking trailer unit such that the second trailer unit may be pulled by the tractor unit via the interlinking trailer unit, characterised in that the second trailer unit is directly flexibly coupled to the interlinking trailer unit by a second fifth wheel, and the steerable wheels on the interlinking trailer unit are steered by steering means responsive to a bend in the flexible coupling between the tractor unit and interlinking trailer unit to steer said wheels by a corresponding degree or degrees.

Thus, the articulated vehicle of the present invention comprises an interlinking trailer unit which is actively steered. The steering of the interlink trailer unit wheels is active in the sense that it is controlled by the steering means in response to flexing of the articulated joint between the tractor unit and interlinking trailer unit.

The steering means is responsive to flexure of the first flexible coupling to steer the wheels by a corresponding, controlled amount.

The second trailer unit may employ only non-steering axles, or alternatively may utilise at least one passive steering axle, or at least one steering axle steered by a second active steering mechanism. Thus, the rear-most trailer unit may incorporate wheels which are actively steered in response to flexing of the joint between the interlinking trailer unit and the rear trailer unit.

By employing the actively steered interlink unit, embodiments of the invention can achieve improved turning performance compared with the prior art vehicles.

The first flexible coupling means is conveniently provided by a king pin on the interlinking trailer unit, received in the tractor unit fifth wheel.

Similarly, the coupling between the interlink trailer and the rear trailer may be in the form of a king pin received in the second fifth wheel.

Preferably, the interlinking trailer unit comprises a forward pair of steerable wheels mounted on forward steerable axle means, and a trailing pair of steerable wheels mounted on trailing steerable axle means. In these arrangements the steering means is arranged to steer both pairs of wheels in response to flexing of the coupling between the tractor unit and interlink unit. Although in one arrangement both sets of wheels may be steered by substantially the same amount, it is preferable for the forward wheels to be steered by a first amount, and the trailing wheels to be steered by an increased amount. It is also preferable that the steering means is arranged to steer the left and right hand wheels of a single axle unit by different amounts for a given bend in the first flexible coupling. Preferably the steering mechanism is arranged such that the wheels on the inside of a bend are steered by a greater angle than the corresponding wheels (on the same axle means) on the outside of the bend. This is desirable because the inside and outside wheels follow circles of different radii as the vehicle turns. This is a known technique and may be achieved by suitable arrangement of the steering linkages in the mechanism, as is well known in the art.

The interlinking trailer unit may comprise means for mounting a container on it, or alternatively may comprise a container.

In embodiments where the interlink trailer includes a container, the king pin of the first flexible coupling means may be located beneath the container. A standard fifth wheel, or fifth wheel means providing the same function, may be provided on the interlinking trailer unit, behind the location of the container.

The interlinking trailer may comprise two steering axles, at least one of which is arranged to trail the container, i.e. it is not beneath the container, but it is located at a position further to the rear.

Preferably the steering means comprises a rotation assembly, rotationally coupled to a chassis of the interlinking vehicle so as to be rotatable about a substantially vertical axis with respect to the chassis. The rotation assembly preferably comprises location means coupled to the tractor unit so as to inhibit rotation of the assembly with respect to the tractor unit as the first coupling means flexes. Thus, as the first flexible coupling bends, the rotation assembly rotates with respect to the chassis but maintains a substantially constant alignment with respect to the tractor unit.

The rotation assembly may comprise a turntable assembly, which may include the king pin, for locating in the tractor unit fifth wheel, and a steering wedge, for location in the wedge-shaped cut-out of the fifth wheel. Thus, the steering wedge may make use of the cut-out feature of the standard fifth wheel to achieve turning of the turntable relative to the interlink unit chassis, and so to control interlink unit steering.

The wedge-shaped cut-out in the standard fifth wheel may also be referred to as a tapered channel or slot.

Preferably the steering means comprises hydraulic means coupled between the rotation assembly and the steerable axle means, and is arranged such that, as the rotation assembly rotates, hydraulic fluid is displaced and in turn drives the steering of the steering wheels.

Preferably the hydraulic means comprises at least one hydraulic ram, coupled between the chassis and the rotation assembly, and at least one hydraulic ram coupled between the chassis and the steering axle means, the rams being hydraulically coupled together such that the displacement of fluid from one of them is communicated to actuate the other.

A second aspect of the invention provides an interlinking trailer unit for use in an articulated vehicle in accordance with the first aspect.

A third aspect of the invention provides an interlinking trailer unit for an articulated vehicle, the unit comprising, a chassis; a turntable assembly, rotationally coupled to the chassis to permit rotation of the assembly relative to the chassis about a vertical axis, the turntable assembly comprising a king pin, for location in the fifth wheel of a tractor unit, and a steering wedge, for location in the tapered channel of the tractor fifth wheel to maintain an alignment between the tractor fifth wheel and the turntable; at least one pair of steerable wheels mounted on steerable axle means; fifth wheel means, trailing the king pin, for receiving a king pin of a further trailer unit; steering means coupled between the turntable assembly and steerable axle means and arranged to steer said wheels in response to a rotation of the turntable means relative to the chassis.

Features associated with the interlinking trailer unit of the first aspect may be employed in the unit of the third aspect with corresponding advantage.

### Brief Description of the Drawings

Embodiments of the invention will now be described with reference to the drawings, of which:
Figure 1 is a highly schematic plan view of a tractor unit suitable for use in embodiments of the invention;
Figure 2 is a schematic plan view of an articulated vehicle embodying the invention and meeting UK turning circle requirements;
Figure 3 is a schematic side view of an interlink trailer unit embodying the invention;
Figure 4 is a schematic side view of a further interlink trailer unit embodying the invention;
Figure 5 is a schematic side view of an interlink unit embodying the invention;
Figure 6 is a schematic view from below of part of the turntable assembly of the embodiments shown in Figures 3, 4 and 5;
Figure 7 is a schematic plan view of part of an interlink trailer unit embodying the invention, corresponding to the tractor unit in "straight ahead" position;
Figure 8 is a schematic plan view of the interlink unit of Figure 7, but with the turntable rotated anticlockwise; and
Figure 9 is a schematic plan view of part of a double axle interlink unit embodying the invention.

### Detailed Description of the Preferred Embodiments

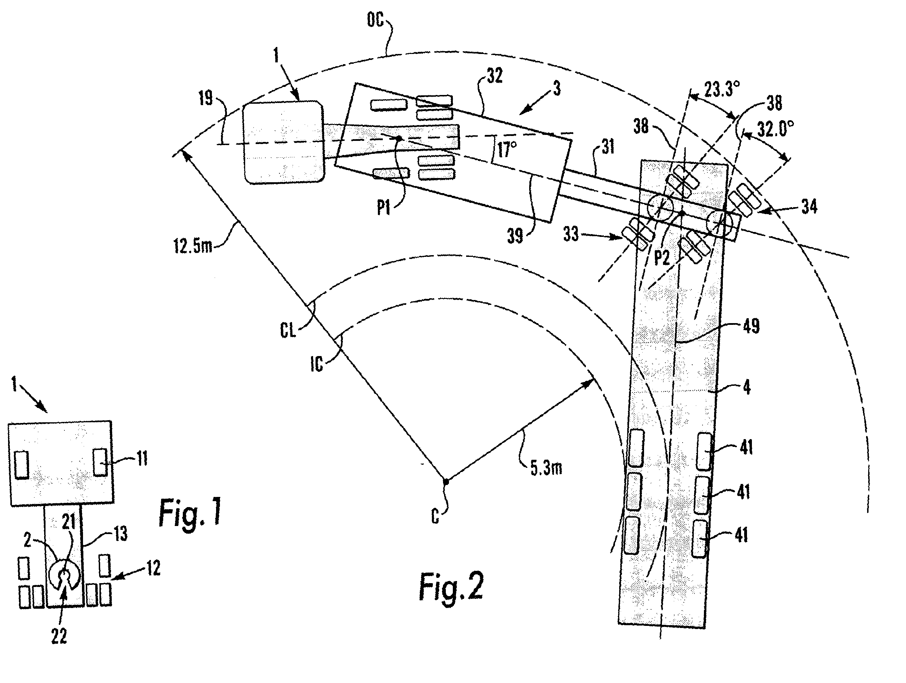

Referring now to Figure 1, embodiments of the present invention may utilise conventional tractor units 1, which have a pair of steering wheels 11, and trailing axles and wheels 12, which may or may not steer also. Upon a chassis 13 there is mounted a so-called "fifth wheel" 2 which is a standard component in the haulage industry. The fifth wheel 2 comprises a central, generally circular aperture 21 for receiving a trailer king pin, and has a wedge-shaped cut-out 22 which guides the king pin into the receiving aperture 21 as the tractor unit is reversed towards a trailer unit for coupling to it.

Figure 2 shows, highly schematically, an articulated vehicle embodying the invention which is able to meet the UK turning circle requirements, i.e. able to follow a path between an outer circle OC of radius 12.5 metres and an inner circle IC of radius 5.3 metres. The tractor unit 1 can be seen, and its centre line is indicated by broken line 19. The interlink trailer unit 3 comprises a chassis 31 on which is mounted a container 32, beneath which is a king pin at position P1 which is located in the fifth wheel of the tractor unit. At the rear of the interlink unit 3 there are two separate steering axles, carrying double-wheel arrangements 33 and 34. In the figure, the tractor unit is turning, such that there is an angle of 17 degrees between the centre line 19 of the tractor unit and the centre line 39 of the interlink unit i.e. the flexible coupling between the tractor unit and interlink unit has been bent through 17 degrees. The active steering mechanism on the interlink unit 3 has, in response to this 17 degree deflection, turned the leading interlink axle through 23.3 degrees and the trailing interlink axle through 32 degrees, both angles being measured relative to the nominal straight ahead positions of the axles, which are perpendicular to the centre line 39, and are indicated by broken lines 38 on the figure. A second trailer unit 4 is pivotally coupled to the interlink unit by means of a king pin at position P2, engaged in a second fifth wheel on the interlink unit (not shown). The second trailer unit 4 has a centre line 49, and three non-steering axles carrying corresponding pairs of wheels 41. Broken line CL indicates the path followed by the midpoint of the middle axle as the articulated vehicle navigates its path between the outer and inner circles. It will be appreciated that the different turning angles of the leading and trailing steering axles of the interlink unit 3 in response to the angle of yaw between the tractor unit and interlink unit are desirable as the centre points of these turning axles are at different radii with respect to the centre C of the turning motion.

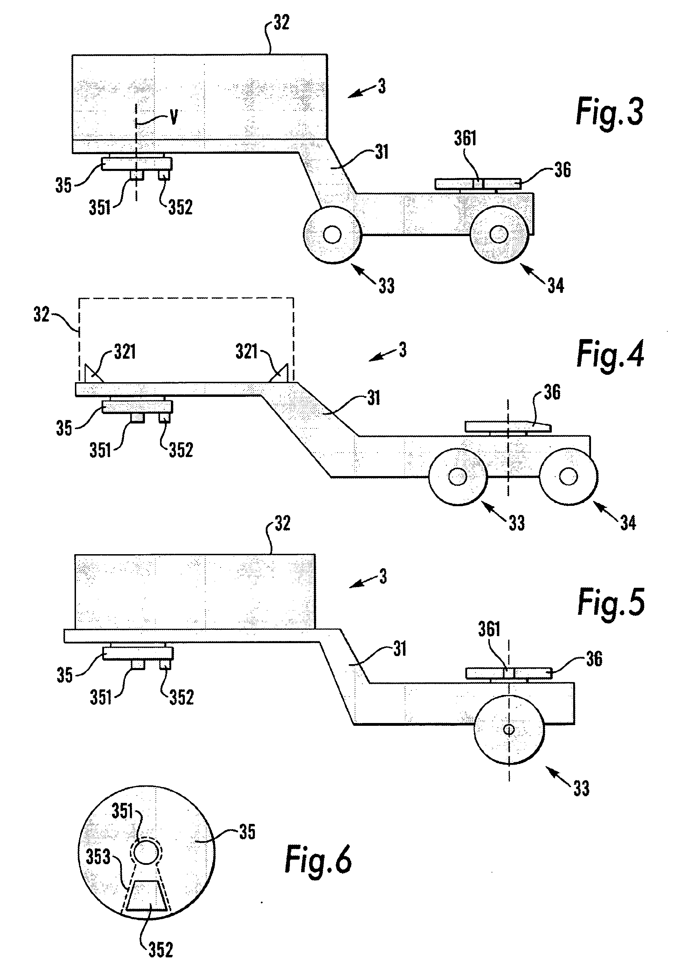

Referring now to Figure 3, a further interlink unit embodying the invention comprises a chassis 31, on which is mounted a container 32 for carrying goods. A turntable assembly 35 is rotationally coupled to the chassis, beneath the container 32, and includes a downward protruding king pin 351 and a locating pin 352 (which can also be in the form of a locating wedge). The means of achieving the rotational coupling between the turntable and chassis is not shown in the figure, but it will be appreciated that the turntable is arranged so as to be rotatable about the vertical axis V shown in the figure. The interlink unit in this example comprises a non-steering forward axle carrying a pair of wheels 33 and a rear, actively steered axle and wheel arrangement 34. The leading axle is arranged beneath the container 32, whereas the rear axle is carried by a portion of the chassis extending to the rear of the container 32. Slightly forward of the rear steering axle there is provided a fifth wheel arrangement 36, having the standard recess 361 for receiving the king pin of a further trailer unit. The centre of the recess 361 is arranged so as to be forward of the rear axle 34.

Moving on to Figure 4, in this embodiment the interlink unit comprise mounting means in the form of mounting pegs 321 for engaging with corresponding recesses in the bottom of a container 32 which can be carried by the unit. This unit utilises the same turntable assembly at the embodiment of Figure 3, but differs in that it is provided with two steering axles 33 and 34 arranged to the rear of the container mounting means 321. A fifth wheel 36 is again mounted on the interlink unit chassis 31, with the fifth wheel central hole being positioned between the centre lines of the axles 33 and 34. In this arrangement, as the turntable unit 35 rotates with respect to the chassis 31 both rear axles 33 and 34 turn, in a direction opposite to the turning of the tractor unit.

Figure 5 shows yet another interlink trailer unit embodying the invention, this time with a single set of steering wheels 33 mounted on axle means located directly beneath the centre of the fifth wheel 36,

Figure 6 shows a schematic view of a turntable assembly suitable for use in the embodiment shown in Figures 3, 4 and 5. The king pin 351 is in the form of a central peg extending from the generally circular plate 35. The location means 352 is in the form of a wedge shaped element, and the king pin and wedge 352 are adapted to locate in the generally keyhole shaped formation 353 in the fifth wheel of the tractor unit. The wedge may be referred to as a steering wedge, or a fifth wheel drive wedge.

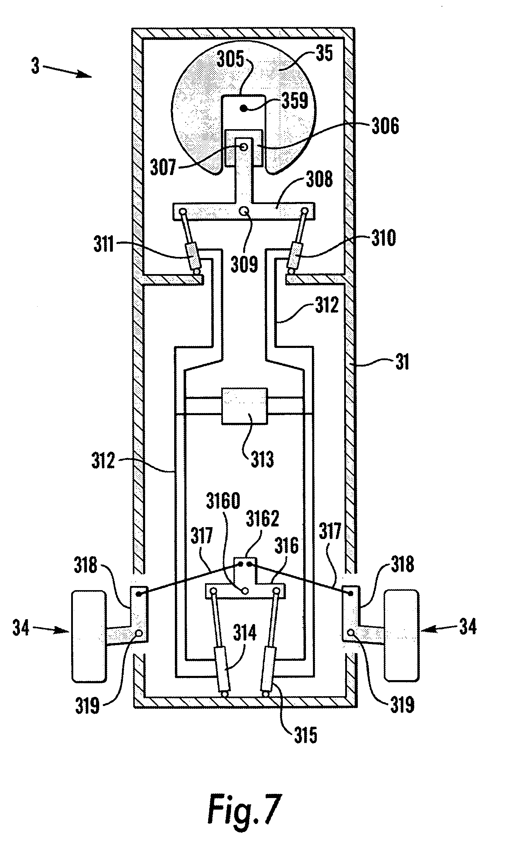

Referring now to Figure 7, an interlink unit embodying the invention comprises a chassis 31 to which is rotationally coupled a turntable assembly 35. The turntable assembly carries a king pin and location means (not shown in the figure) and is arranged to rotate about a central axis 359. The turntable 35 includes a channel 305 having a pair or parallel sidewalls, in which a sliding element 306 is slidably mounted. Pivotally coupled (by coupling means 307) to the sliding element 306 is a rotating arm member in the form of a T-bar 308. The position of the coupling between the T bar and sliding element is indicated by 307. The T bar is arranged to pivot about a pivot point 309, which is fixed in relation to the chassis 31. Hydraulic rams 310 and 311 are coupled between respective arms of the T bar and the chassis 31 and are arranged to extend or compress as appropriate as the T bar is rotated about the pivot 309. Extension corresponds to the ram's piston being drawn out of its cylinder, and compression corresponds to the piston means being driven further into the cylinder means. Hydraulic lines 312 connect the rams 310 and 311 to corresponding rams 314 and 315 coupled between the chassis 31 and a steering arm 316. The steering arm is pivotally coupled to the chassis 31, at a fixed pivot point 3160. A forward protruding arm 3162 of the steering arm 316 is connected by track rods 317 to steerable axle assemblies 318 carrying steering wheels 34. The two axle assemblies together form a steerable axle of the interlink trailer. Each steering axle assembly is arranged to pivot about a respective pivot 319. A control unit 313 is hydraulically coupled to the hydraulic lines 312 and is operable to maintain the hydraulic system in a pressurised state. Preferably the control box is arranged to pre-tension the hydraulic system.

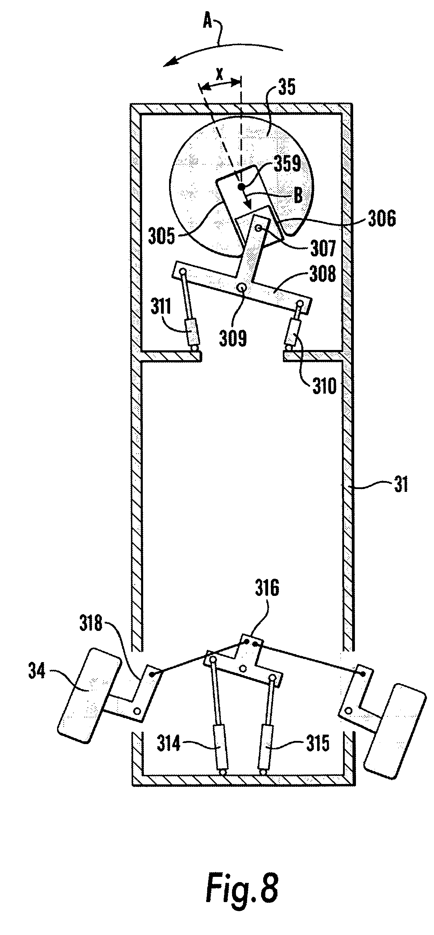

Moving on to Figure 8, this shows the unit of Figure 7 but with the turntable 35 turned through an angle x anticlockwise, in the direction shown by arrow A. This has resulted in the sliding element 306 sliding radially outwards along the channel 305, in the direction shown by arrow B, and has also resulted in the pivot point 307 of the coupling between the sliding element 306 and the t bar 308 being deflected to the right, relative to the centreline of the unit in the figure. This in turn has caused the t bar 308 to rotate about pivot 309, causing ram 311 to extend, and ram 310 to compress, displacing hydraulic fluid accordingly. This displacement of fluid has been communicated to rams 314 and 315, such that left ram 314 has lengthened and right ram 315 which has shortened, so turning the steering arm 316. This has resulted in wheels 34 being turned in the opposite sense to the turntable 35. An advantage of this type of active steering mechanism is that it provides a maximum rate of change of steering angle at the steering axle as the turntable first begins to rotate form its straight ahead position. In other words, it results in the rate of hydraulic fluid displacement, for actuating steering, being the greatest at the straight-ahead position, i.e. when the coupling between the interlink unit and the tractor first begins to bend. It provides a large steering angle at the steering axles for a small yaw angle between the tractor and interlink trailer.

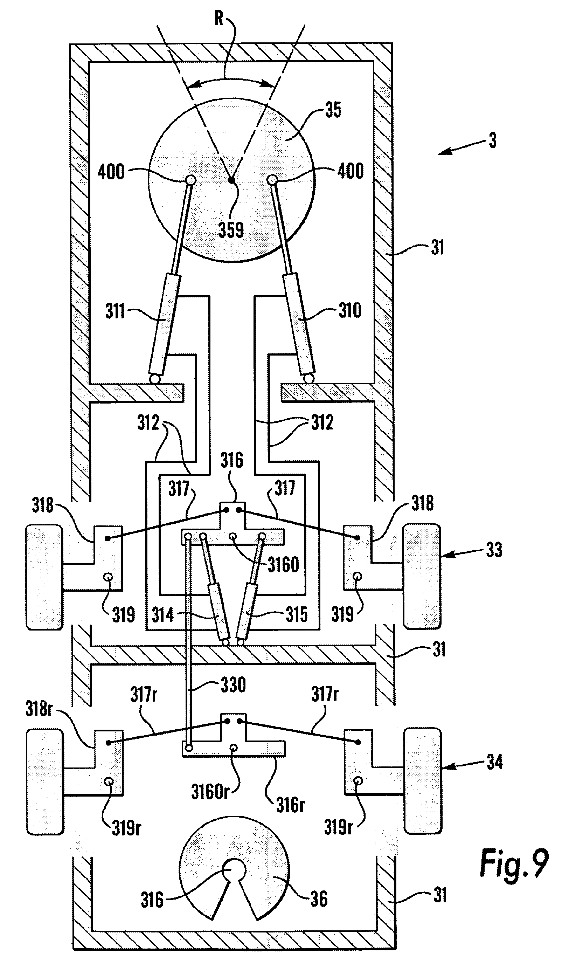

Moving on to Figure 9, this shows part of another interlink trailer embodying the invention. The trailer 3 includes a turntable 35, carrying a king pin and locating device on its lower surface (not shown) such that the turntable can rotate (see arrow R) relative to the chassis 31 as the tractor unit turns. The rotational axis 359 of the turntable is coincident with the centre of the king pin, and is fixed relative to the chassis 31. Left and right hydraulic ram assemblies 311 and 311 are directly coupled at one end to the turntable, at diametrically opposed positions 400 relative to axis 359, and at their other ends are coupled to rigid cross members of the chassis. As the turntable rotates clockwise, ram 311 extends and ram 310 shortens. Fluid displaced by the ram movements is communicated by hydraulic lines 312 to steering actuating rams 314 and 315 towards the rear of the unit. These steering rams are coupled between the chassis and a forward steering arm 316 which is linked by track rods 317 to steering axles 318 in the same way as in the embodiment of Figures 7 and 8. However, in the present example, there is a second, rearward steering arm 316r, on a pivot 3160r, and coupled by track rods 317r to rear steering axles 318r. A linking arm 330 connects the forward and rearward steering arms together such that actuation of the steering rams 314 and 315 steers both axles of this double-axle arrangement. It will be appreciated by those skilled in the art that the precise geometries of the steering arms, steering axles and the various linkages may be adapted to provide different steering of the two axles in response to a single rotation of the turntable, and to provide differential steering of the left and right-hand wheels of the same steering axle. Towards the rear of the interlink unit 3 there is provided a fifth wheel 36, having a standard recess 361 for coupling to the king pin of a further trailer unit.

It will be appreciated that in certain embodiments of the invention, the steering means of the interlink unit may comprise a front assembly, fitted above the tractor, in the first trailer chassis frame. This front assembly may comprise hydraulic rams that are retracted/extended by rotation of the front turntable according to the tractor's yaw angle during cornering. Thus, the steering assembly may comprise a front ram system.

The steering system may include a rear ram system comprising hydraulic rams arranged to be retracted/extended according to the amount of oil displaced at the front ram system according to the tractor yaw angle (the angle of the bend in the first flexible coupling). The steering means may comprise a wedge attached to the underside of the front turntable to cause the turntable to rotate through the same range as the tractor yaw angle.

## Claims

1. An articulated vehicle comprising:
a steerable tractor unit (1);
an interlinking trailer unit (3) comprising at least one pair of steerable wheels (33 or 34) mounted on steerable axle means (318);
a first fifth wheel (2) flexibly coupling the interlinking trailer unit to the tractor unit such that the interlinking trailer unit may be pulled by the tractor unit;
a second trailer unit (4); and
second flexible coupling means (36) flexibly coupling the second trailer unit to the interlinking trailer unit such that the second trailer unit may be pulled by the tractor unit via the interlinking trailer unit,
**characterised in that** the second trailer unit (4) is directly flexibly coupled to the interlinking trailer unit by a second fifth wheel (36), and the steerable wheels (33, 34) on the interlinking trailer unit are steered by steering means (314-317) responsive to a bend in the flexible coupling between the tractor unit and interlinking trailer unit to steer said wheels by a corresponding degree or degrees.

2. A vehicle in accordance with Claim 1, wherein said first flexible coupling means comprises a king pin (351) on the interlinking trailer unit, and king pin receiving means (2) on the tractor unit.

3. A vehicle in accordance with Claim 2, wherein the king pin receiving means comprises said first fifth wheel (2).

4. A vehicle in accordance with any preceding claim, wherein said second flexible coupling means comprises a king pin on the second trailer unit, and king pin receiving means (36) on the interlinking trailer unit.

5. A vehicle in accordance with Claim 4, wherein the king pin receiving means of the interlinking unit comprises said second fifth wheel (36).

6. A vehicle in accordance with any preceding claim, wherein the interlinking trailer unit (3) comprises a forward pair of steerable wheels (33) mounted on forward steerable axle means (318), and a trailing pair of steerable wheels (34) mounted on trailing steerable axle means (318r), and wherein the steering means (314-317) is arranged to steer, in response to said bend, the forward wheels by a first degree or degrees and the trailing wheels by a second degree or degrees, wherein the second degree is greater than the first degree.

7. A vehicle in accordance with any preceding claim, wherein the or each pair of steerable wheels (33, 34) comprises a left hand and a right hand wheel, and for a given bend in the first flexible coupling, the steering means is arranged to steer the left and right hand wheels by different degrees.

8. A vehicle in accordance with any preceding claim, wherein the interlinking trailer unit (3) comprises a container (32) for containing goods to be transported .

9. A vehicle in accordance with Claim 8, wherein the interlinking trailer unit comprises a king pin (351) located beneath said container.

10. A vehicle in accordance with Claim 8 or Claim 9, wherein said second fifth wheel (36) is arranged to trail the container.

11. A vehicle in accordance with any one of Claims 8 to 10, wherein the interlinking trailer comprises two steering axles (33, 34), at least one of which trails the container.

12. A vehicle in accordance with any preceding claim, wherein the detector means comprises a rotation assembly (35), rotationally coupled to a chassis of the interlinking trailer unit (3) so as to be rotatable about a substantially vertical axis with respect to the chassis, the rotation assembly comprising location means (352, 306) coupled to the tractor unit so as to inhibit rotation of the assembly with respect to the tractor unit, whereby as the first flexible coupling bends the rotation assembly rotates with respect to the chassis.

13. A vehicle in accordance with Claim 12, wherein the rotation assembly comprises a turntable assembly.

14. A vehicle in accordance with Claim 13, wherein the location means comprises a steering wedge (351), attached to the turntable assembly (35), the wedge being located in a tapered channel (22) in said first fifth wheel (2) of the tractor unit (1).

15. A vehicle in accordance with any one of Claims 12 to 14 wherein the steering means comprises hydraulic means (310-315) coupled between the rotation assembly (35) and the steerable axle means (318), and arranged such that as the rotation assembly rotates, hydraulic fluid is displaced and in turn drives the steering of the steering wheels.

16. A vehicle in accordance with Claim 15 wherein the hydraulic means comprises at least one hydraulic ram (310, 311) coupled between the chassis and the rotation assembly, and at least one hydraulic ram (314, 315) coupled between the chassis and the steering axle means, the rams being hydraulically coupled.

17. An interlinking trailer unit for use in an articulated vehicle in accordance with any preceding claim.

18. An interlinking trailer unit for an articulated vehicle, the unit comprising:
a chassis (31);
at least one pair of steerable wheels (34) mounted on steerable axle means (318);
steering means (306-317) arranged to steer said wheels;
fifth wheel means (36), trailing the king pin (351), for receiving a king pin of a further trailer unit;
**characterised by**:
a turntable assembly (35), rotationally coupled to the chassis to permit rotation of the assembly relative to the chassis about a vertical axis, the turntable assembly comprising a king pin (351), for location in the fifth wheel of a tractor unit, and a steering wedge (352), for location in the tapered channel of the tractor fifth wheel to maintain an alignment between the tractor fifth wheel and the turntable; the turntable assembly being operatively connected to the steering means to steer the wheels
in response to a rotation of the turntable means relative to the chassis.

19. A unit in accordance with Claim 18 further comprising a container (32) mounted on the chassis.

20. A unit in accordance with Claim 18, further comprising means (321) for mounting a container (32) on the chassis.

21. A unit in accordance with any one of Claims 18 to 20, wherein the steering means comprises hydraulic means (310-315).

22. A unit in accordance with any one of Claims 18 to 21 comprising at least two pairs of steerable wheels (33, 34), mounted respectively on a forward steerable axle means (318) and a trailing steerable axle means (318r), the steering means being arranged to steer both the forward and trailing axle means in response to rotation of the turntable assembly.

## Patentansprüche

1. Gelenkfahrzeug, umfassend:
eine lenkbare Zugeinheit (1);
eine verbindende Anhängereinheit (3) mit mindestens einem Paar lenkbarer Räder (33 oder 34), die an lenkbaren Achsvorrichtungen (318) montiert sind;
ein Aufnahmeelement einer Sattelkupplung (2), welches die verbindende Anhängereinheit flexibel an die Zugeinheit derart ankoppelt, dass die verbindende Anhängereinheit durch die Zugeinheit gezogen werden kann;
eine zweite Anhängereinheit (4); und
zweite flexible Kupplungsmittel (36), welche die zweite Anhängereinheit flexibel an die verbindende Anhängereinheit derart ankoppeln, dass die zweite Anhängereinheit durch die Zugeinheit über die verbindende Anhängereinheit gezogen werden kann,
**dadurch gekennzeichnet, dass** die zweite Anhängereinheit (4) durch ein Aufnahmeelement einer zweite Sattelkupplung (36) an die verbindende Anhängereinheit unmittelbar flexibel angekoppelt ist, und die lenkbaren Räder (33, 34) an der verbindenden Anhängereinheit durch Lenkvorrichtungen (314-317) gelenkt werden in Abhängigkeit einer Abwinkelung in der flexiblen Kupplung zwischen der Zugeinheit und der verbindenden Anhängereinheit, um die genannten Räder mit einem entsprechenden Lenkwinkel oder -winkeln zu beaufschlagen.

2. Fahrzeug nach Anspruch 1, bei dem die erste flexible Kupplung einen Königszapfen (351) an der verbindenden Anhängereinheit und eine Königszapfenaufnahme (2) an der Zugeinheit aufweist.

3. Fahrzeug nach Anspruch 2, bei dem die Königszapfenaufnahme das Aufnahmeelement der ersten Sattelkupplung (2) umfasst.

4. Fahrzeug nach einem der vorgenannten Ansprüche, bei dem die zweiten flexiblen Kupplungsmittel einen Königszapfen an der zweiten Anhängereinheit und eine Königszapfenaufnahme (36) an der verbindenden Anhängereinheit aufweist.

5. Fahrzeug nach Anspruch 4, bei dem bei dem die Königszapfenaufnahme das Aufnahmeelement der zweiten Sattelkupplung (36) umfasst.

6. Fahrzeug nach einem der vorgenannten Ansprüche, bei dem die verbindende Anhängereinheit (3) ein vorderes Paar lenkbarer Räder (33) aufweist, die an einer vorderen lenkbaren Achsvorrichtung (318) montiert sind, und ein nachlaufendes Paar lenkbarer Räder (34), die an einer nachfolgenden lenkbaren Achsvorrichtung (318r) montiert sind, wobei die Lenkvorrichtungen (314-317) konfiguriert sind, um in Abhängigkeit der genannten Abwinkelung die vorderen Räder um einen ersten Winkel oder erste Winkel und die nachlaufenden Räder um einen zweiten Winkel oder zweite Winkel zu lenken, wobei der zweite Winkel größer als der erste Winkel ist.

7. Fahrzeug nach einem der vorgenannten Ansprüche, bei dem das oder in jedes Paar lenkbarer Räder (33, 34) ein linkes und ein rechtes Rad aufweist und für einen vorgegebenen Winkel in der ersten Kupplung die Lenkvorrichtungen angeordnet sind, um die linken und rechten Räder mit unterschiedlichen Lenkwinkeln zu beaufschlagen.

8. Fahrzeug nach einem der vorgenannten Ansprüche, bei dem die verbindende Anhängereinheit (3) einen Behälter (32) zur Aufnahme zu transportierender Güter aufweist.

9. Fahrzeug nach Anspruch 8, bei dem die verbindende Anhängereinheit einen unter dem Laderaum angeordneten Königszapfen (351) aufweist.

10. Fahrzeug nach Anspruch 8 oder 9, bei dem das Aufnahmeelement der zweiten Sattelkupplung (36) zum Schleppen des Behälters ausgebildet ist.

11. Fahrzeug nach einem der Ansprüche 8 bis 10, bei dem die verbindende Anhängereinheit zwei Lenkachsen (33, 34) aufweist, von denen zumindest eine den Behälter schleppt.

12. Fahrzeug nach einem der vorgenannten Ansprüche, bei dem die Erfassungsmittel eine Drehanordnung (35) aufweisen, die drehbar mit einem Chassis der verbindenden Anhängereinheit (3) gekoppelt ist, so dass diese in Bezug auf das Chassis um eine im wesentlichen vertikale Achse drehbar ist, wobei die Drehanordnung Positioniermittel (352, 306) aufweist, die mit der Zugeinheit gekoppelt sind, um ein Drehen der Anordnung in Bezug auf die Zugeinheit zu hemmen, wodurch bei einer Abwinkelung der ersten flexiblen Kupplung die Drehanordnung in Bezug auf das Chassis dreht.

13. Fahrzeug nach Anspruch 12, bei dem die Drehanordnung eine Drehtischanordnung aufweist.

14. Fahrzeug nach Anspruch 13, bei dem die Positioniermittel einen Steuerkeil (351) umfassen, der an der Drehtischanordnung (35) angebracht ist, wobei der Keil in einer sich verjüngenden Nut (22) in dem Aufnahmeelement der zweiten Sattelkupplung (2) der Zugeinheit (1) angeordnet ist.

15. Fahrzeug nach einem der Ansprüche 12 bis 14, bei dem die Lenkvorrichtungen hydraulische Mittel (310-315) umfassen, die zwischen der Drehanordnung (35) und den lenkbaren Achsvorrichtungen (318) eingekoppelt und derart angeordnet sind, dass bei einem Drehen der Drehanordnung Hydraulikflüssigkeit verdrängt und **dadurch** entsprechend ein Lenken der gelenkten Räder bewirkt wird.

16. Fahrzeug nach Anspruch 15, bei dem die hydraulischen Mittel mindestens einen Hydraulikkolben (310, 311) umfassen, der zwischen dem Chassis und der Drehanordnung eingekoppelt ist, sowie mindestens einen Hydraulikkolben (314, 315), der zwischen dem Chassis und den lenkbaren Achsvorrichtungen eingekoppelt ist, wobei die Hydraulikkolben hydraulisch miteinander gekoppelt sind.

17. Verbindende Anhängereinheit zur Verwendung in einem Gelenkfahrzeug gemäß einem der vorgenannten Ansprüche.

18. Verbindende Anhängereinheit für ein Gelenkfahrzeug, umfassend:
ein Chassis (31);
mindestens ein Paar lenkbarer Räder (34), die an einer lenkbaren Achsvorrichtung (318) montiert sind;
Lenkvorrichtungen (306-317) zum Steuern der genannten Räder;
Aufnahmemittel (36) einer Sattelkupplung, die den Königszapfen (351) ziehen, zur Aufnahme eines Königszapfens einer weiteren Anhängereinheit;
**gekennzeichnet durch** eine Drehtischanordnung (35), die drehbar mit dem Chassis gekoppelt ist, um einen Drehen der Anordnung relativ zu dem Chassis um eine vertikale Achse zuzulassen, wobei die Drehtischanordnung einen Königszapfen (351) zur Anordnung in dem Aufnahmeelement einer Sattelkupplung aufweist, sowie einen Steuerkeil (352) zur Anordnung in der sich verjüngenden Nut des Aufnahmeelements der Sattelkupplung der Zugeinheit zur Gewährleistung einer Ausrichtung zwischen dem Aufnahmeelement der Sattelkupplung der Zugeinheit und dem Drehtisch; wobei die Drehtischanordnung mit den Lenkvorrichtungen wirkverbunden ist, um die Räder in Abhängigkeit einer Drehung der Drehtischanordnung relativ zu dem Chassis zu lenken.

19. Einheit nach Anspruch 18, die einen an dem Chassis montierten Behälter (32) aufweist.

20. Einheit nach Anspruch 18, weiterhin umfassend Mittel (321) zur Befestigung eines Behälters (32) an dem Chassis.

21. Einheit nach einem der Ansprüche 18 bis 20, bei der die Lenkvorrichtungen hydraulische Mittel (310-315) umfassen.

22. Einheit nach einem der Ansprüche 18 bis 21, umfassend zumindest zwei Paare lenkbarer Räder (33,34), die jeweils an einer vorderen lenkbaren Achsvorrichtung (318) und einer nachfolgenden lenkbaren Achsvorrichtung (318r) montiert sind, wobei die Lenkvorrichtungen angeordnet sind, um sowohl die vordere lenkbare Achsvorrichtung als auch die nachfolgende lenkbare Achsvorrichtung in Abhängigkeit einer Drehung der Drehtischanordnung zu lenken.

## Revendications

1. - Véhicule articulé comprenant :
- une unité de tracteur orientable (1) ;
- une unité de remorque d'interconnexion (3) comprenant au moins une paire de roues orientables (33 ou 34) montées sur un moyen d'arbre orientable (318) ;
- une première cinquième roue (2) couplant de manière flexible l'unité de remorque d'interconnexion à l'unité de tracteur de telle sorte que l'unité de remorque d'interconnexion peut être tirée par l'unité de tracteur ;
- une seconde unité de remorque (4) ; et
- un second moyen de couplage flexible (36) couplant de manière flexible la seconde unité de remorque à l'unité de remorque d'interconnexion de telle sorte que la seconde unité de remorque peut être tirée par l'unité de tracteur par l'intermédiaire de l'unité de remorque d'interconnexion,
**caractérisé par le fait que** la seconde unité de remorque (4) est directement couplée de manière flexible à l'unité de remorque d'interconnexion par une seconde cinquième roue (36), et les roues orientables (33, 34) sur l'unité de remorque d'interconnexion sont dirigées par un moyen de direction (314-317) sensible à une courbure dans le couplage flexible entre l'unité de tracteur et l'unité de remorque d'interconnexion pour diriger lesdites roues d'un degré correspondant ou de degrés correspondants.

2. - Véhicule selon la revendication 1, dans lequel ledit premier moyen de couplage flexible comprend un axe-pivot (351) sur l'unité de remorque d'interconnexion, et un moyen de réception d'axe-pivot (2) sur l'unité de tracteur.

3. - Véhicule selon la revendication 2, dans lequel le moyen de réception d'axe-pivot comprend ladite première cinquième roue (2).

4. - Véhicule selon l'une quelconque des revendications précédentes, dans lequel ledit second moyen de couplage flexible comprend un axe-pivot sur la seconde unité de remorque, et un moyen de réception d'axe-pivot (36) sur l'unité de remorque d'interconnexion.

5. - Véhicule selon la revendication 4, dans lequel le moyen de réception d'axe-pivot de l'unité d'interconnexion comprend ladite seconde cinquième roue (36).

6. - Véhicule selon l'une quelconque des revendications précédentes, dans lequel l'unité de remorque d'interconnexion (3) comprend une paire avant de roues orientables (33) montées sur un moyen d'essieu orientable avant (318), et une paire de roues orientables arrières (34) montées sur un moyen d'essieu orientable arrière (318r), et dans lequel le moyen de direction (314-317) est disposé pour diriger, en réponse à ladite courbure, les roues avants d'un premier ou de premiers degrés et les roues arrières d'un second ou de seconds degrés, dans lequel le second degré est supérieur au premier degré.

7. - Véhicule selon l'une quelconque des revendications précédentes, dans lequel la ou chaque paire de roues orientables (33, 34) comprend une roue gauche et une roue droite, et pour une courbure donnée dans le premier couplage flexible, le moyen orientable est agencé pour diriger les roues gauche et droite de différents degrés.

8. - Véhicule selon l'une quelconque des revendications précédentes, dans lequel l'unité de remorque d'interconnexion (3) comprend un conteneur (32) pour contenir des marchandises devant être transportées.

9. - Véhicule selon la revendication 8, dans lequel l'unité de remorque d'interconnexion comprend un axe-pivot (351) situé sous ledit conteneur.

10. - Véhicule selon la revendication 8 ou la revendication 9, dans lequel ladite seconde cinquième roue (36) est agencée pour remorquer le conteneur.

11. - Véhicule selon l'une quelconque des revendications 8 à 10, dans lequel la remorque d'interconnexion comprend deux arbres de direction (33, 34), dont l'un au moins remorque le conteneur.

12. - Véhicule selon l'une quelconque des revendications précédentes, dans lequel le moyen de détecteur comprend un ensemble de rotation (35), couplé de façon rotative à un châssis de l'unité de remorque d'interconnexion (3) de façon à être apte à tourner autour d'un axe sensiblement vertical par rapport au châssis, l'ensemble de rotation comprenant un moyen de positionnement (352, 306) couplé à l'unité de tracteur de façon à empêcher la rotation de l'ensemble par rapport à l'unité de tracteur, ce par quoi à mesure que le premier couplage flexible se courbe, l'ensemble de rotation tourne par rapport au châssis.

13. - Véhicule selon la revendication 12, dans lequel l'ensemble de rotation comprend un ensemble de plaque tournante.

14. - Véhicule selon la revendication 13, dans le moyen de positionnement comprend une cale orientable (351), attachée à l'ensemble de plaque tournante (35), la cale étant située dans un canal effilé (22) dans ladite première cinquième roue (2) de l'unité de tracteur (1).

15. - Véhicule selon l'une quelconque des revendications 12 à 14, dans lequel le moyen de direction comprend un moyen hydraulique (310-315) couplé entre l'ensemble de rotation (35) et le moyen d'essieu orientable (318), et agencé de telle sorte qu'à mesure que l'ensemble de rotation tourne, du fluide hydraulique est déplacé et à son tour entraîne la direction des roues de direction.

16. - Véhicule selon la revendication 15, dans lequel le moyen hydraulique comprend au moins un vérin hydraulique (310, 311) couplé entre le châssis et l'ensemble de rotation, et au moins un vérin hydraulique (314, 315) couplé entre le châssis et le moyen d'arbre de direction, les vérins étant couplés hydrauliquement.

17. - Unité de remorque d'interconnexion destinée à être utilisé dans un véhicule articulé selon l'une quelconque des revendications précédentes.

18. - Unité de remorque d'interconnexion pour un véhicule articulé, l'unité comprenant :
- un châssis (31) ;
- au moins une paire de roues orientables (34) montées sur un moyen d'essieu orientable (318) ;
- un moyen de direction (306-317) disposé pour diriger lesdites roues ;
- un moyen de cinquième roue (36), tirant l'axe-pivot (351), pour recevoir un axe-pivot d'une autre unité de remorque ;
**caractérisée par** :
- un ensemble de plaque tournante (35), couplé à rotation au châssis pour permettre une rotation de l'ensemble par rapport au châssis autour d'un axe vertical, l'ensemble de plaque tournante comprenant un axe-pivot (351), pour un positionnement dans la cinquième roue d'une unité de tracteur, et une cale d'orientation (352), pour un positionnement dans le canal effilé de la cinquième roue de tracteur pour maintenir un alignement entre la cinquième roue de tracteur et la plaque tournante ; l'ensemble de plaque tournante étant connecté de façon opérationnelle au moyen de direction pour diriger les roues
- en réponse à une rotation du moyen de plaque tournante par rapport au châssis.

19. - Unité selon la revendication 18, comprenant en outre un conteneur (32) monté sur le châssis.

20. - Unité selon la revendication 18, comprenant en outre un moyen (321) pour le montage d'un conteneur (32) sur le châssis.

21. - Unité selon l'une quelconque des revendications 18 à 20, dans laquelle le moyen de direction comprend un moyen hydraulique (310-315).

22. - Unité selon l'une quelconque des revendications 18 à 21, comprenant au moins deux paires de roues orientables (33, 34), montées respectivement sur un moyen d'essieu orientable avant (318) et un moyen d'essieu orientable arrière (318r), le moyen de direction étant agencé pour diriger à la fois les moyens d'essieu avant et arrière en réponse à une rotation de l'ensemble de plaque tournante.
